# EUROPEAN PATENT APPLICATION

(11) **EP 0 927 651 A2**
(43) Date of publication of application: **07.07.1999**
(21) Application number: 98124738.0
(22) Date of filing: 28.12.1998
(51) Int. Cl.: B60B 27/00

(54) **Vehicle wheel bearing-hub unit and related manufacturing process**

(30) Priority: 30.12.1997 IT TO971148
(71) Applicant: SKF INDUSTRIE S.p.A., I-10123 Torino (IT)
(72) Inventor: Boin, Giovanni, 10095 Grugliasco (Torino) (IT); Picca, Mauro, 10063 Perosa Argentina (Torino) (IT)
(74) Representative: Lotti, Giorgio

(57) **Abstract**

A vehicle wheel bearing-hub unit (1) of the type comprising a dual ring of balls (3, 4) in which the radially inner and axially outer race is formed in a separate annular component (5) inserted on the hub (2), where the annular component (5) is axially engaged on the hub (2) by means of an annular end portion (2b') of the hub which is folded by means of cold forming. The surface (5a) of the annular component (5) presents radial roughness means (7) such that in performing the cold forming, the folded portion (2b') is deformed by the roughness means (7) and reproduces the shape thereof, whereby the annular component (5) is secured for rotation with the hub (2).

A process to manufacture the above mentioned unit, in which the annular component (5) is inserted on the hub with no radial interference or minimum radial interference.

## Description

The present invention relates to a vehicle wheel bearing-hub unit and to its manufacturing process.

Ball bearings for vehicle wheel hubs, of the dual ball ring type, at angular contact, in which the radially and axially inner race is formed into a separate annular component inserted on the hub, whereas the radially inner and axially outer race is formed on the hub itself, are well known.

Those skilled in the art know different methods that allow to block axially such annular component on the hub. The most traditional method consists in using a bolt axially screwed in a central hole of the hub, where the head of the bolt thrusts axially on the inner side of the annular component.

Yet this method, despite being very simple, implies several operations which make the method quite expensive; in particular, it is necessary to make a screw thread in the central hole of the hub. Besides it does not allow but a limited reduction of the inside diameter of the inner ring and consequently the weight and the global size of the bearing can be only slightly reduced; this is because it is not advisable to reduce considerably the thickness of the wall where the screw thread is made, since this could cause the wall to yield.

A more recent solution, as described e.g. in patent DE-A-4134434 and EP-A-0 736 398, consists in cold forming, and especially roll forming, an axial tubular prolongation formed on the axially inner side of the hub, so that on the extremity of it a rolled part is created which blocks the inner side of the annular component axially, engaging it on the hub.

The above mentioned blocking techniques which make use of roll forming, despite allowing saving of costs and materials, present inconveniences due to the fact that the annular component is inserted on the hub with a significant interference in order to prevent it from rotating in relationship with the hub. If the annular component is allowed to rotate, the surfaces in contact between the annular component and the hub would wear so that a long usage would create a clearance not acceptable inside the bearing, and the annular component would consequently break. On the other hand, the driving of the annular component creates in it high radial stresses which are further increased during the roll forming. In such case the smallest imperfection in the annular component would mean high breaking risk.

It is an object of the present invention to provide a bearing-hub unit adapted to overcome the above mentioned inconveniences. More in particular it is suggested to provide a bearing-hub unit provided with an annular component rotatably blocked on the hub without generating inner significant interference.

This and further objects that will be better described in the following, are achieved according to the present invention by a vehicle wheel bearing-hub unit, of the type with dual set of balls, in which the radially and axially inner race is formed on a separate annular component inserted on the hub, whereas the radially inner and axially outer race is formed on the hub itself, and in which said annular component is axially engaged on the hub by means of an end annular portion of the hub which is folded by cold forming, characterised in that the surface of the annular component on which said end portion of the hub is folded presents at least one roughness means so that, in performing the cold forming, said folded portion of the hub is deformed by said roughness means, and reproduces its form in order to couple the annular component in rotation with the hub.

Further significant features of the invention are disclosed in claims 2-7.

According to another feature of the invention, it is suggested a process to rotatably couple with a vehicle wheel hub an annular component forming one of the radially inner races of a rolling bearing for said hub, including the following steps:
- mounting on the hub a dual set of rolling balls and one outer ring of a rolling bearing;
- setting of said annular component which presents one inner surface provided with at least one means of roughness;
- inserting, with no radial interference, or with minimum interference, said annular component on a straight tubular portion of the hub;
- radially and outwardly folding, by means of cold forming, the axially inner end of said tubular portion of the hub against said inner surface of the annular component so that said annular component is axially secured on the hub, thus obtaining one end portion which is folded and is deformed by said roughness means and reproduces at least part of its form, in order to couple the annular component in rotation to the hub.

In the following it will be given the description of the structural and functional features of one preferred non-restrictive embodiment of the unit and of the process according to the invention; reference will be made to the accompanying drawings in which:
figure 1 is a schematic view, axially sectioned, of a bearing-hub unit according to the present invention;
figure 2 is a front view, to an enlarged scale, of one annular component of which the unit in fig.1 is provided; and
figure 3 is an axial section view of the annular component in fig.2.

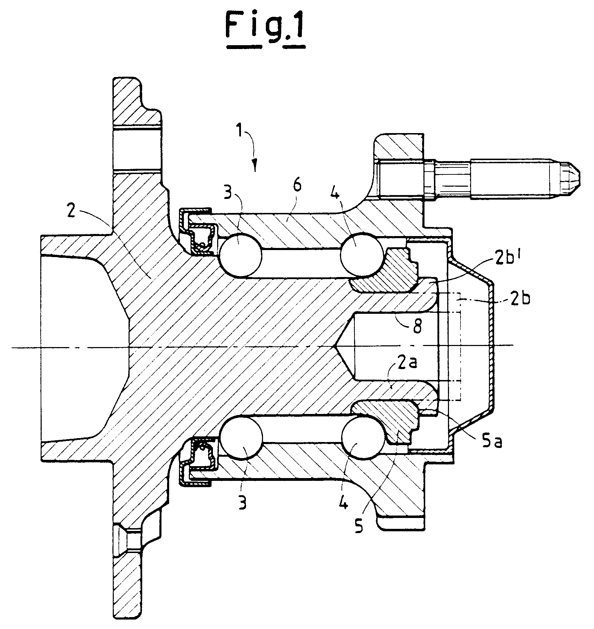

With reference to figure 1, reference number 1 overall indicates a vehicle wheel unit. The unit includes one central hub 2 that forms one of the races for a set of balls, in particular the radially inner race for the axially outer set of balls 3. Reference number 4 indicates the axially inner set of balls, that is the set facing the inner part of the vehicle; as to the balls 4 the inner race consists of a separate annular component 5, inserted on the hub 2, more in particular on an axially inner tubular portion 2a. The outer races for the two sets of balls 3 and 4 are both formed in a radially outer ring 6. The end of the tubular portion 2a of the hub is adapted to be radially and outwardly folded by means of cold forming, e.g. by roll forming, against the axially inner surface 5a of the annular component 5, so that said annular component, as well as the whole bearing, can be axially secured on the hub 2.

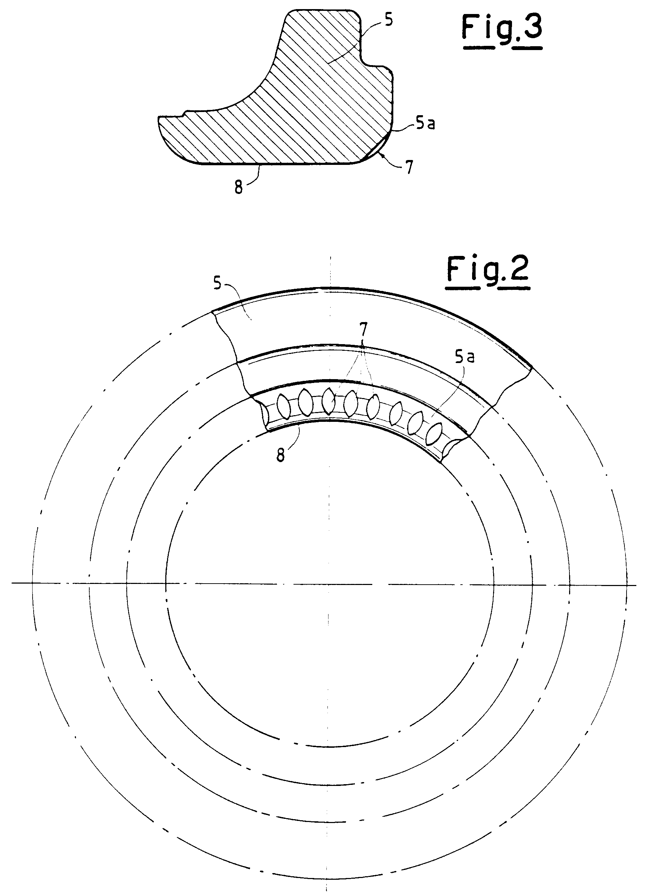

According to the present invention, the annular component 5 is inserted with no radial interference, or with minimum radial interference, on the tubular portion 2a which is initially straight as shown by section lining 2b in figure 1. With reference to figures 2 and 3, according to one preferred embodiment of the present invention, the surface 5a of the annular component 5, on which the end 2b' (drawn in continuous line in fig.1) is to be folded by roll forming, presents roughness means 7, preferably in the form of indentation. In performing the roll forming, the steel of the roll formed part 2b' of the hub, in correspondence with the roughness means, is deformed so that it reproduces at least partly its form; as it is known, the steel of which the hub is made is less hard than the steel of the annular component 6 of the bearing. Such form coupling prevents reciprocal rotations of the hub and the annular component 6.

With reference to figure 2, the roughness means 7 in the preferred embodiment of the invention are made mainly on the circumference at the mouth area jointing the inner cylindrical surface 8 of the annular component 6.

The roughness means and knurling 7 may be formed by means of different techniques, e.g. forging or turning.

In the embodiment here illustrated the knurling is distributed in continuously on one circumference of the annular component; however it is understood that the knurling geometry may be different from the one here illustrated. The distribution of the indentation may also be discreet or sectional, and its number may vary providing there are enough of them to guarantee the reciprocal rotational locking of the hub and the annular component.

It is understood that the invention is not limited to the embodiment here described and illustrated, and that it is to be considered as an illustrative embodiment of the idea of the invention; the form and distribution of parts, as well as the constructive and functional details may however be modified. According to one variation of the invention (not shown), the roughness means may be made as notches instead as projecting parts so that the roll forming causes the rolled portion of the hub to partially or completely penetrate inside the notches so that a result equivalent to the one described before is achieved.

The height or radial depth of the roughness means will preferably be 0,5 ÷ 0,6 mm.

As it is possible to appreciate, the invention allows to firmly engage the annular component on the hub both radially and in the sense of rotation (or of the circumference), overcoming the inconveniences previously discussed in the introduction.

## Claims

1. A vehicle wheel bearing-hub unit (1), of the type comprising a dual set of bearing balls (3, 4) wherein the radially inner and axially outer race is formed in a separate annular component (5) inserted in the hub (2), said annular component (5) being restrained onto the hub by a hub end portion (2b') radially and outwardly folded by cold forming,
characterised in that the surface (5a) of the annular component over which said hub end portion (2b') is folded provides at least one roughness means (7) such that in performing said cold forming, said folded portion (2b') is deformed by said roughness means (7) and reproduces at least partly the shape thereof, whereby the annular component (5) is secured for rotation with the hub (2).

2. A bearing-hub unit as claimed in claim 1, characterised in that it comprises a plurality of said roughness means (7).

3. A bearing-hub unit as claimed in claim 2, characterised in that said roughness means (7) are distributed along a circumference of the annular component.

4. A bearing-hub unit as claimed in claim 1, characterised in that said at least one roughness means (7) is located at a joint portion between the axially inner side of the annular component (5) and an inner cylindrical surface (8) of the annular component (5).

5. A bearing-hub unit as claimed in claim 1, characterised in that said at least one roughness means (7) consists of at least one radial relief.

6. A bearing-hub unit as claimed in claim 1, characterised in that said at least one roughness means (7) consist of at least one radial notch.

7. A bearing-hub unit as claimed in claim 2, characterised in that said roughness means (7) consist of one indentation.

8. Method to couple in rotation to a vehicle wheel hub (2) an annular component (5) forming one of the radially inner races of a roll bearing for said hub, including the following steps:
- mounting on the hub (2) a dual set of bearing balls (3, 4) and one outer ring (6) of a roll bearing;
- setting said annular component (5) which presents one axially inner surface (5a) provided with at least one roughness means (7);
- inserting said annular component (5) on a straight tubular portion (2a) of the hub with no interference or with minimum interference;
- outwardly and radially folding, by means of cold forming, the axially inner end (2b) of said tubular portion (2a) of the hub (2) against said surface (5a) of the annular component (5) so that said annular component is locked on the hub, thus obtaining a folded end (2b') which is deformed by said roughness means (7) and reproduces at least part of its form, in order to couple in rotation the annular component (5) and the hub (2).
